# EUROPEAN PATENT APPLICATION

(11) **EP 3 663 833 A2**
(43) Date of publication of application: **10.06.2020**
(21) Application number: 19213647.1
(22) Date of filing: 04.12.2019
(51) Int. Cl.: G02B 27/00, F21V 8/00, G02B 27/01

(54) **WAVEGUIDE DEVICE AND OPTICAL ENGINE**

(30) Priority: 05.12.2018 US 201862775393 P
(71) Applicant: HTC Corporation, Taoyuan City 330, (TW)
(72) Inventor: DENG, Qing-Long, 330 Taoyuan City (TW)
(74) Representative: Emde, Eric

(57) **Abstract**

A waveguide device includes two holographic optical elements and a waveguide element. Each of the holographic optical elements has a first holographic grating and a second holographic grating. The first holographic grating is configured to diffract light of a first wavelength to propagate with a first diffraction angle. The second holographic grating is configured to diffract light of a second wavelength to propagate with a second diffraction angle. The waveguide element is configured to guide light propagated from one of the holographic optical elements to another of the holographic optical elements.

## Description

### BACKGROUND

### Technical Field

The present disclosure relates to a waveguide device and an optical engine.

### Description of Related Art

Various types of computing, entertainment, and/or mobile devices can be implemented with a transparent or semi-transparent display through which a user of a device can view the surrounding environment. Such devices, which can be referred to as see-through, mixed reality display device systems, or as augmented reality (AR) systems, enable a user to see through the transparent or semi-transparent display of a device to view the surrounding environment, and also see images of virtual objects (e.g., text, graphics, video, etc.) that are generated for display to appear as a part of, and/or overlaid upon, the surrounding environment. These devices, which can be implemented as head-mounted display (HMD) glasses or other wearable display devices, but are not limited thereto, often utilize optical waveguides to replicate an image to a location where a user of a device can view the image as a virtual image in an augmented reality environment. As this is still an emerging technology, there are certain challenges associated with utilizing waveguides to display images of virtual objects to a user.

Nowadays, many conventional waveguides with diffraction gratings attached thereon have been used. Each of the waveguides and the diffraction gratings attached thereon are used for transmitting a single color. As such, a conventional optical engine for providing projected images to an eye of a user usually requires a plurality of waveguides to transmit three primary colors, which is not conducive to the reduction of weight and thickness of the optical engine. In addition, since the diffraction gratings on the conventional waveguides are required to transmit the projected images with an expanded viewing angle, the efficiency is low.

Accordingly, it is an important issue for the industry to provide an optical engine capable of solving the aforementioned problems.

### SUMMARY

An aspect of the disclosure is to provide a waveguide device and an optical engine that can efficiently solve the aforementioned problems.

According to an embodiment of the disclosure, a waveguide device includes two holographic optical elements and a waveguide element. Each of the holographic optical elements has a first holographic grating and a second holographic grating. The first holographic grating is configured to diffract light of a first wavelength to propagate with a first diffraction angle. The second holographic grating is configured to diffract light of a second wavelength to propagate with a second diffraction angle. The waveguide element is configured to guide light propagated from one of the holographic optical elements to another of the holographic optical elements.

In an embodiment of the disclosure, the first holographic grating and the second holographic grating are superimposed together.

In an embodiment of the disclosure, each of the holographic optical elements further has a third holographic grating and a fourth holographic grating. The third holographic grating is configured to diffract the light of the first wavelength to propagate with a third diffraction angle. The fourth holographic grating is configured to diffract the light of the second wavelength to propagate with a fourth diffraction angle.

In an embodiment of the disclosure, the third holographic grating and the fourth holographic grating are superimposed together.

In an embodiment of the disclosure, the holographic optical elements are at an identical side of the waveguide element.

In an embodiment of the disclosure, the holographic optical elements are at opposite sides of the waveguide element respectively.

In an embodiment of the disclosure, at least one of the holographic optical elements is a reflective holographic element.

In an embodiment of the disclosure, at least one of the holographic optical elements is a transmissive holographic element.

In an embodiment of the disclosure, the waveguide element is in shape of a cuboid.

In an embodiment of the disclosure, the waveguide element has a first surface and a second surface opposite to the first surface. The first surface has a first portion parallel to the second surface and a second portion inclined relative to the second surface.

In an embodiment of the disclosure, the waveguide element is wedge shaped.

According to an embodiment of the disclosure, an optical engine includes a projector, two holographic optical elements, and a waveguide element. The projector is configured to project light of a first wavelength and light of a second wavelength. Each of the holographic optical elements has a first holographic grating and a second holographic grating. The first holographic grating is configured to diffract the light of the first wavelength to propagate with a first diffraction angle. The second holographic grating is configured to diffract the light of the second wavelength to propagate with a second diffraction angle. The waveguide element is configured to guide light propagated from one of the holographic optical elements to another of the holographic optical elements.

In an embodiment of the disclosure, the light of the first wavelength and the light of the second wavelength projected by the projector enter the waveguide element from the second portion of the first surface.

In an embodiment of the disclosure, the optical engine further includes a beam splitting module optically coupled between the projector and said one of the holographic optical elements.

In an embodiment of the disclosure, said one of the holographic optical elements is a reflective holographic optical element, and the beam splitting module is optically coupled to said one of the holographic optical elements via the waveguide element.

In an embodiment of the disclosure, the beam splitting module comprises a plurality of splitters arranged away from the projector along one dimension.

Accordingly, in some embodiments of the optical engine of the present disclosure, each of the holographic optical elements has a plurality of holographic gratings for diffracting the light of different wavelengths, so full color images can be outputted to a single eye of a user from only one waveguide element, which facilitates the reduction of weight and thickness of the optical engine. Furthermore, in some embodiments of the optical engine of the present disclosure, each of the holographic optical elements has a plurality of holographic gratings for diffracting the light of an identical wavelength to propagate with different diffraction angles, so the viewing angle of the outputted images can be effectively increased. In addition, in some embodiments of the optical engine of the present disclosure, a beam splitting module is optically coupled between the projector and the waveguide element, so images projected by the projector can be expanded in one dimension and thus further increase the viewing angle of the outputted images.

It is to be understood that both the foregoing general description and the following detailed description are by examples, and are intended to provide further explanation of the disclosure as claimed.

### BRIEF DESCRIPTION OF THE DRAWINGS

The disclosure can be more fully understood by reading the following detailed description of the embodiment, with reference made to the accompanying drawings as follows:
Fig. 1 is a schematic view of an optical engine according to some embodiments of the present disclosure;
Fig. 2 is a schematic view of a waveguide device and a beam splitting module according to some embodiments of the present disclosure;
Fig. 3 is a schematic diagram illustrating holographic gratings in a holographic optical element;
Fig. 4 is a schematic view of an optical exposure system for manufacturing a holographic optical element;
Fig. 5 is a schematic diagram illustrating holographic gratings in the holographic optical element;
Fig. 6 is a schematic view of a waveguide device according to some embodiments of the present disclosure; and
Fig. 7 is a schematic view of a waveguide device according to some embodiments of the present disclosure.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts. However, specific structural and functional details disclosed herein are merely representative for purposes of describing example embodiments, and thus may be embodied in many alternate forms and should not be construed as limited to only example embodiments set forth herein. Therefore, it should be understood that there is no intent to limit example embodiments to the particular forms disclosed, but on the contrary, example embodiments are to cover all modifications, equivalents, and alternatives falling within the scope of the disclosure.

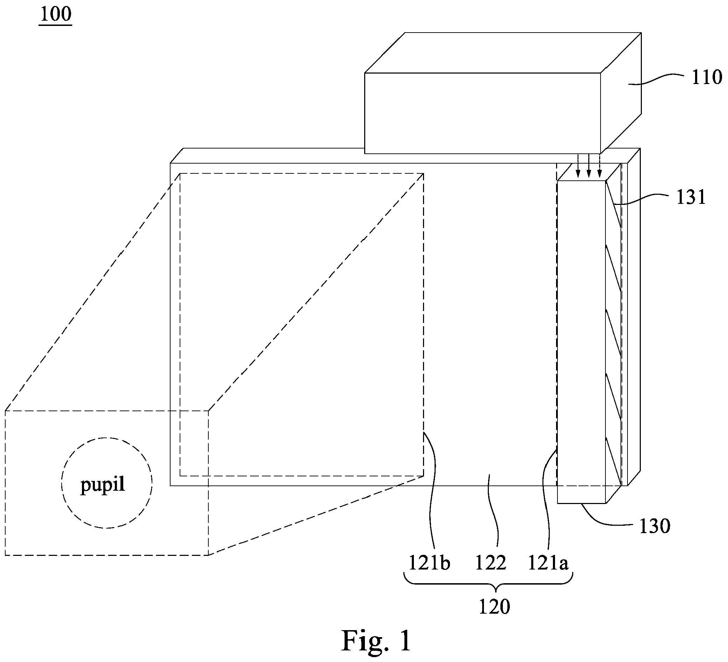

Reference is made to Fig. 1. Fig. 1 is a schematic view of an optical engine 100 according to some embodiments of the present disclosure. As shown in Fig. 1, the optical engine 100 may be used in an augmented reality device (not shown) which can be implemented as head-mounted display (HMD) glasses or other wearable display devices, but is not limited thereto. The optical engine 100 includes a projector 110 and a waveguide device 120. The waveguide device 120 includes two holographic optical elements 121a, 121b and a waveguide element 122. The holographic optical elements 121a, 121b are attached to the waveguide element 122 and serve as light guiding elements of light-input and light-output, respectively. That is, light projected by the projector 110 can be inputted to the holographic optical element 121a and outputted from the holographic optical element 121b, and the waveguide element 122 is configured to guide the light propagated from the holographic optical element 121a to the holographic optical element 121b based on the principle of total reflection.

In some embodiments, the projector 110 is configured to project red light R, green light G, and blue light B, but the disclosure is not limited in this regard. In some embodiments, the wavelength band of the red light R is from about 622 nm to about 642 nm, but the disclosure is not limited in this regard. In some embodiments, the wavelength band of the green light G is from about 522 nm to about 542 nm, but the disclosure is not limited in this regard. In some embodiments, the wavelength band of the blue light B is from about 455 nm to about 475 nm, but the disclosure is not limited in this regard. In some embodiments, the projector 110 adopts light-emitting diodes to project the red light R, the green light G, and the blue light B. In practical applications, the projector 110 may adopt laser diodes to project the red light R, the green light G, and the blue light B with smaller wavelength band.

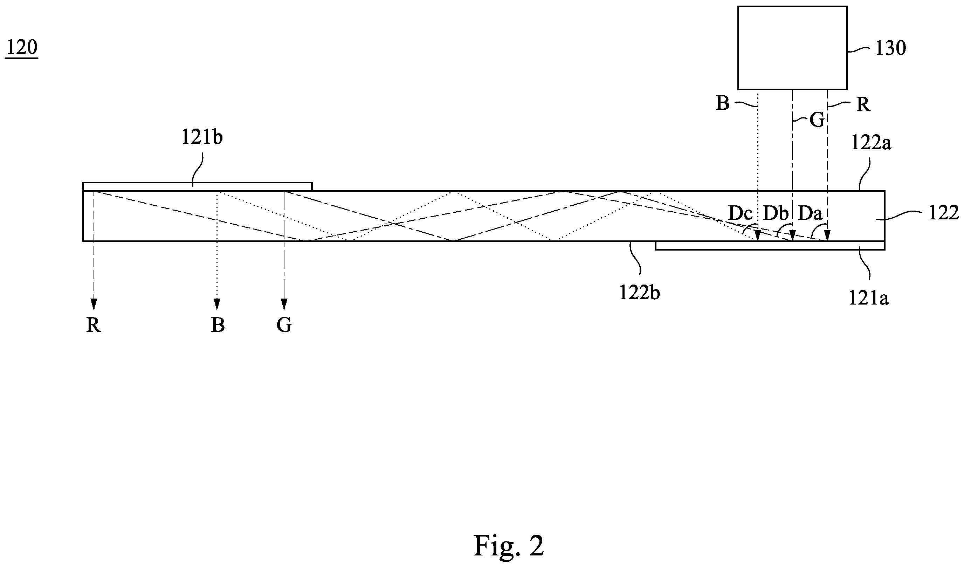

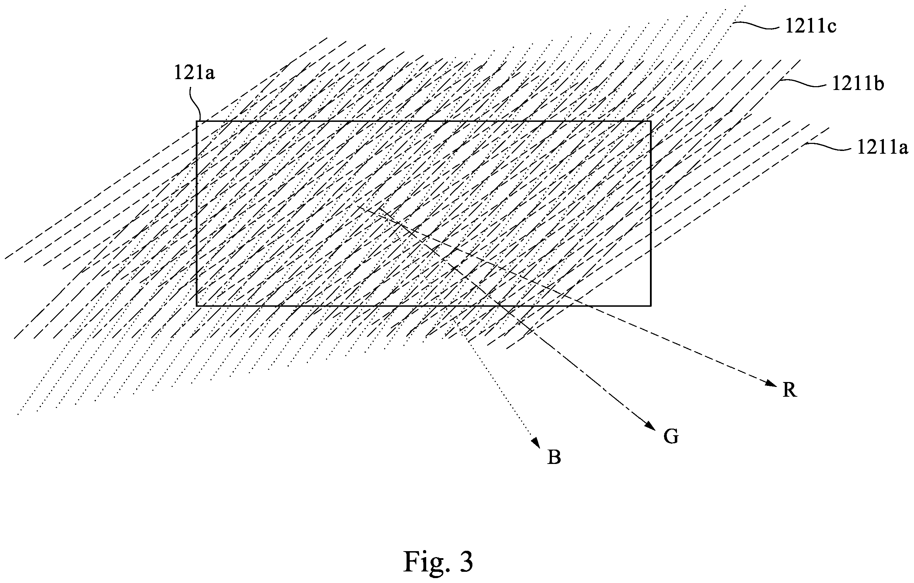

Reference is made to Figs. 2 and 3. Fig. 2 is a schematic view of the waveguide device 120 and a beam splitting module 130 according to some embodiments of the present disclosure. Fig. 3 is a schematic diagram illustrating holographic gratings in the holographic optical element 121a. As shown in Figs. 2 and 3, the holographic optical element 121a has a first holographic grating 1211a, a second holographic grating 1211b, and a third holographic grating 1211c. The first holographic grating 1211a is configured to diffract the red light R to propagate with a first range of diffraction angle. For example, the first holographic grating 1211a is configured to diffract light of which the wavelength is 632 nm (which is within the wavelength band of the red light R) to propagate with a first diffraction angle Da. The second holographic grating 1211b is configured to diffract the green light G to propagate with a second range of diffraction angle. For example, the second holographic grating 1211b is configured to diffract light of which the wavelength is 532 nm (which is within the wavelength band of the green light G) to propagate with a second diffraction angle Db. The third holographic grating 1211c is configured to diffract the green light B to propagate with a third range of diffraction angle. For example, the third holographic grating 1211c is configured to diffract light of which the wavelength is 465 nm (which is within the wavelength band of the blue light B) to propagate with a first diffraction angle Dc. The waveguide element 122 is configured to guide the red light R, the green light G, and the blue light B propagated from the holographic optical element 121a to the holographic optical element 121b.

In some embodiments, the first holographic grating 1211a, the second holographic grating 1211b, and the third holographic grating 1211c are superimposed together. As such, the holographic optical element 121a can have a small size.

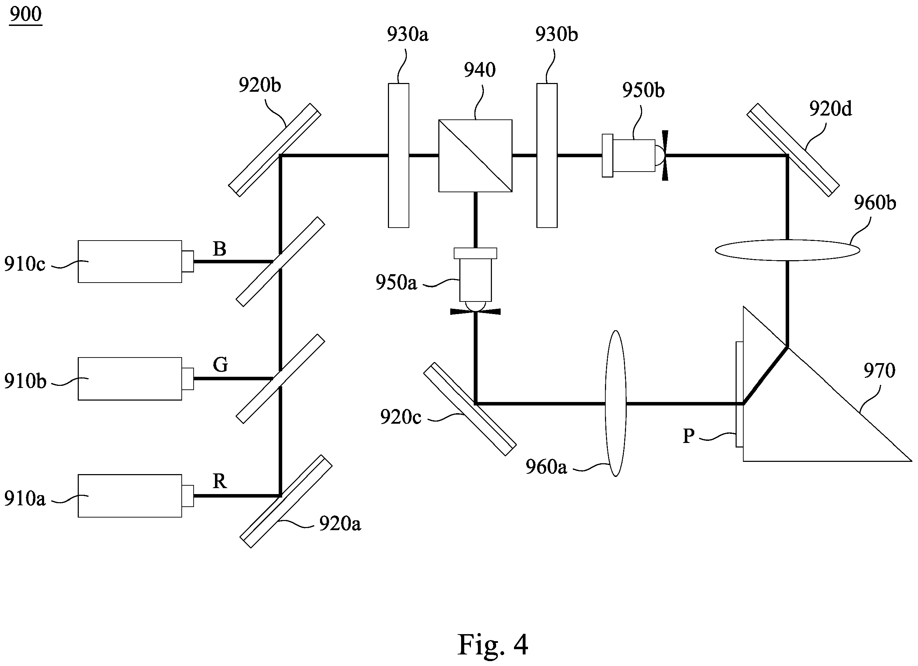

Reference is made to Fig. 4. Fig. 4 is a schematic view of an optical exposure system 900 for manufacturing a holographic optical element 121a. As shown in Fig. 4, the optical exposure system 900 includes three light sources 910a, 910b, 910c configured to emit the red light R, the green light G, and the blue light B, respectively. The optical exposure system 900 further includes four mirrors 920a, 920b, 920c, 920d, two half-wave plates 930a, 930b, a polarizing beam splitter 940, two spatial filters 950a, 950b, two lenses 960a, 960b, and a prism 970. A photopolymer is attached to a side of the prism 970. The optical exposure system 900 is configured to expose a portion of the photopolymer P with two light beams (which are integrated from the red light R, the green light G, and the blue light B) in difference incidence directions from opposite sides of the photopolymer P. The photopolymer P includes monomer, polymer, photo-initiator, and binder. When the photopolymer P is subjected to an exposure process, the photo-initiator receives photons to generate radicals, so that the monomers begin to polymerize (i.e., photopolymerization). By using the exposure method of hologram interference fringe, the monomer that is not illuminated by the light (i.e., in dark zone) is diffused to the light irradiation zone (i.e., bright zone) and polymerized, thereby causing a non-uniform concentration gradient of the polymer. And finally, after fixing, phase gratings (i.e., the first holographic grating 1211a, the second holographic grating 1211b, and the third holographic grating 1211c) each including bright and dark stripes arranged in a staggered manner can be formed, and the photopolymer P is transformed to the holographic optical element 121a.

In some embodiments, the first holographic grating 1211a, the second holographic grating 1211b, and the third holographic grating 1211c are thin holographic gratings. In some embodiments, the first holographic grating 1211a, the second holographic grating 1211b, and the third holographic grating 1211c are volume holographic gratings. It is notable that light diffracted by a volume holographic grating can propagate with a specific diffraction angle based on the Bragg's law.

In some embodiments, a volume holographic grating can form a transmissive holographic grating or a reflective holographic grating according to different fabrication methods. Specifically, as shown in Fig. 4, by exposing the photopolymer P with two light beams in difference incidence directions from opposite sides of the photopolymer P, the holographic optical element 121a can be fabricated as a reflective holographic element (i.e., the first holographic grating 1211a, the second holographic grating 1211b, and the third holographic grating 1211c are reflective holographic gratings). In some embodiments, by exposing the photopolymer P with the light beams in difference incidence directions from the same side of the photopolymer P (the optical path of the optical exposure system 900 as shown in Fig. 4 needs to be modified), the holographic optical element 121a can be fabricated as a transmissive holographic element (i.e., the first holographic grating 1211a, the second holographic grating 1211b, and the third holographic grating 1211c are transmissive holographic gratings).

In some embodiments, the holographic optical element 121b may also be formed with the first holographic grating 1211a, the second holographic grating 1211b, and the third holographic grating 1211c. As such, portions of the red light R, the green light G, and the blue light B propagating in the waveguide element 122 can be respectively diffracted by the first holographic grating 1211a, the second holographic grating 1211b, and the third holographic grating 1211c of the holographic optical element 121b and then be outputted out of the waveguide device 120 to reach an eye (i.e., the pupil as shown in Fig. 1) of a user.

In some embodiments, the holographic optical element 121b can also be fabricated as a transmissive holographic element or a reflective holographic element. For example, as shown in Fig. 2, the holographic optical elements 121a, 121b are both reflective holographic elements and at opposite sides of the waveguide element 122 respectively. Specifically, the holographic optical elements 121a, 121b are respectively attached to a first surface 122a and a second surface 122b of the waveguide element 122.

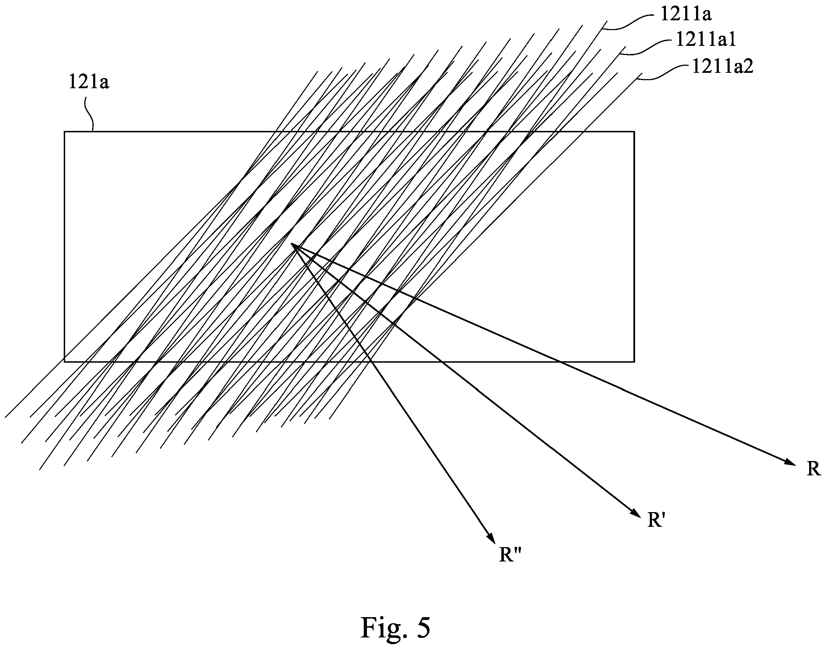

Reference is made to Fig. 5. Fig. 5 is a schematic diagram illustrating holographic gratings in the holographic optical element 121a. As shown in Fig. 5, in addition to the first holographic grating 1211a, the holographic optical element 121a further has a fourth holographic grating 1211a1 and a fifth holographic grating 1211a2. The fourth holographic grating 1211a1 is configured to diffract the red light R to propagate with a fourth range of diffraction angle. For example, the fourth holographic grating 1211a1 is configured to diffract light of which the wavelength is 632 nm to propagate with a fourth diffraction angle which is equal to the first diffraction angle Da plus 5 degrees (as indicated by light R' shown in Fig. 5). The fifth holographic grating 1211a2 is configured to diffract the red light R to propagate with a fifth range of diffraction angle. For example, the fifth holographic grating 1211a2 is configured to diffract light of which the wavelength is 632 nm to propagate with a fifth diffraction angle which is equal to the first diffraction angle Da plus 10 degrees (as indicated by light R" shown in Fig. 5).

In some embodiments, the holographic optical element 121a may further has additional holographic gratings other than the second holographic grating 1211b and being configured to diffract light of which the wavelength is 532 nm to propagate with diffraction angles deviated from the second diffraction angle Db (e.g., deviated about 5 degrees, 10 degrees, etc.). In some embodiments, the holographic optical element 121a may further has additional holographic gratings other than the third holographic grating 1211c and being configured to diffract light of which the wavelength is 465 nm to propagate with diffraction angles deviated from the third diffraction angle Dc (e.g., deviated about 5 degrees, 10 degrees, etc.). As such, the viewing angle of the images outputted from the optical engine 100 can be effectively increased. For example, the increased viewing angle may be equal to or greater than 60 degrees.

In some embodiments, all of the holographic gratings mentioned above in the holographic optical element 121a may be superimposed together, so the holographic optical element 121a can have a small size. In some embodiments, the holographic optical element 121b can be formed with holographic gratings therein that are identical or similar to those in the holographic optical element 121a.

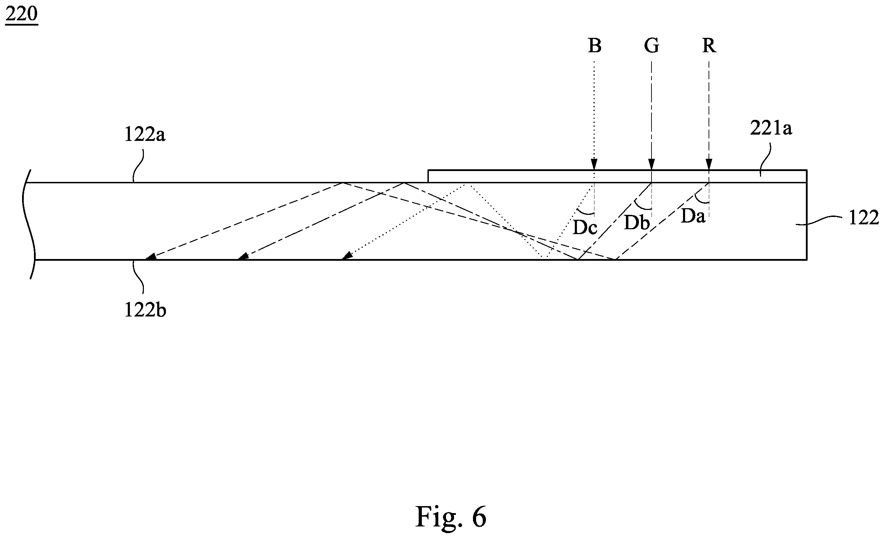

Reference is made to Fig. 6. Fig. 6 is a schematic view of a waveguide device 220 according to some embodiments of the present disclosure. The embodiments as illustrated by Fig. 6 differ from the embodiments as illustrated by Fig. 2 in that the holographic optical element 221a is a transmissive holographic element. In other words, the holographic optical elements 221a, 121b are at an identical side of the waveguide element 122. Specifically, the holographic optical elements 221a, 121b are attached to the first surface 122a of the waveguide element 122.

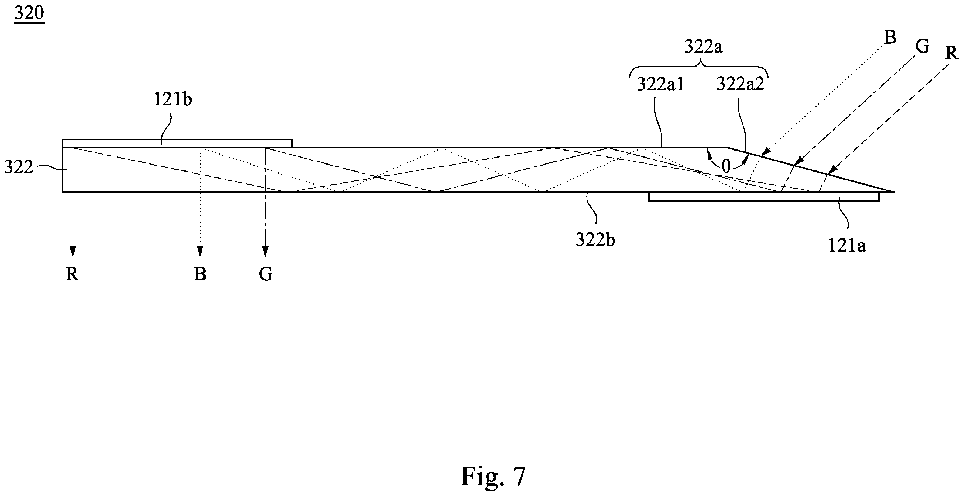

In some embodiments, as shown in Fig. 2, the waveguide element 122 is in shape of a cuboid. That is, the first surface 122a and the second surface 122b of the waveguide element 122 are parallel to each other, but the disclosure is not limited in this regard. Reference is made to Fig. 7. Fig. 7 is a schematic view of a waveguide device 320 according to some embodiments of the present disclosure. As shown in Fig. 7, the waveguide device 320 includes the holographic optical elements 121a, 121b and a waveguide element 322. The waveguide element 322 has a first surface 322a and a second surface 322b opposite to the first surface 322a. The first surface 322a has a first portion 322a1 parallel to the second surface 322b and a second portion 322a2 inclined relative to the second surface 322b. The holographic optical element 121b is attached to the first portion 322a1 of the first surface 322a. The holographic optical element 121a is attached to the second surface 322b and adjacent to the second portion 322a2 of the first surface 322a. The red light R, the green light G, and the blue light B projected by the projector 110 enter the waveguide element 322 from the second portion 322a2 of the first surface 322a. After entering the waveguide element 322 from the second portion 322a2 of the first surface 322a, the red light R, the green light G, and the blue light B are diffracted by the holographic optical element 121a, propagate in the waveguide element 322, and then are diffracted by the holographic optical element 121b to be outputted out of the waveguide device 320.

As shown in Fig. 7, an included angle θ between the first portion 322a1 and the second portion 322a2 of the first surface 322a in the waveguide element 322 is smaller than 180 degrees. With the above-mentioned configurations, the incident angle of the red light R, the green light G, and the blue light B can be changed to increase the amount of light that propagates in the waveguide element 322 based on the principle of total reflection, so as to further increase entire efficiency of the waveguide device 320, which is greater than 1% for example. It is noted that the efficiency of the waveguide device 320 may be defined by a ratio of the amount of light outputted (i.e., diffracted) by the holographic optical element 121b with respect to the amount of light inputted into the holographic optical element 121a.

In some embodiments, as illustrated by Fig. 7, the waveguide element 322 is wedge shaped, but the disclosure is not limited in this regard. In some other embodiments, the shape of the waveguide element 322 can be modified to have a protrusion protruded from the first surface 322a, and the second portion 322a2 is on the protrusion, such that the second portion 322a2 may be at least partially higher than the first portion 322a1.

As shown in Fig. 1, the optical engine 100 further includes a beam splitting module 130 optically coupled between the projector 110 and the holographic optical element 121a. The beam splitting module 130 is configured to expand the images projected by the projector 110 in one dimension, so as to further increase the viewing angle of the images outputted out of the waveguide device 120. In addition, by using the beam splitting module 130, the light outlet of the projector 110 can be designed as a small aperture to avoid the overall volume of the optical engine 100 being too large. In some embodiments, the holographic optical element 121a is a reflective holographic optical element, and the beam splitting module 130 is optically coupled to the holographic optical element 121a via the waveguide element 122, as illustrated by Fig. 2. In some embodiments, the beam splitting module 130 includes a plurality of splitters 131 arranged away from the projector along the above-mentioned dimension. That is, each of the splitters 131 is optically coupled between the projector 110 and a part of the holographic optical element 121a.

In some embodiments, the projector 110 may be a telecentric system or a non-telecentric system. In some embodiments, the projector 110 may include a DLP (Digital Light Processing) module or a LCOS (Liquid Crystal on Silicon) module.

In some embodiments, the waveguide element 122 can be made of a material having a refractive index from about 1.4 to about 2.2. In some embodiments, the material of the waveguide element 122 may include glass, plastics, or transparent polymers.

According to the foregoing recitations of the embodiments of the disclosure, it can be seen that in some embodiments of the optical engine of the present disclosure, each of the holographic optical elements has a plurality of holographic gratings for diffracting the light of different wavelengths, so full color images can be outputted to a single eye of a user from only one waveguide element, which facilitates the reduction of weight and thickness of the optical engine. Furthermore, in some embodiments of the optical engine of the present disclosure, each of the holographic optical elements has a plurality of holographic gratings for diffracting the light of an identical wavelength to propagate with different diffraction angles, so the viewing angle of the outputted images can be effectively increased. In addition, in some embodiments of the optical engine of the present disclosure, a beam splitting module is optically coupled between the projector and the waveguide element, so images projected by the projector can be expanded in one dimension and thus further increase the viewing angle of the outputted images.

Although the present disclosure has been described in considerable detail with reference to certain embodiments thereof, other embodiments are possible. Therefore, the spirit and scope of the appended claims should not be limited to the description of the embodiments contained herein.

It will be apparent to those skilled in the art that various modifications and variations can be made to the structure of the present disclosure without departing from the scope or spirit of the disclosure. In view of the foregoing, it is intended that the present disclosure cover modifications and variations of this disclosure provided they fall within the scope of the following claims.

## Claims

1. A waveguide device, comprising:
two holographic optical elements each having a first holographic grating and a second holographic grating, the first holographic grating being configured to diffract light of a first wavelength to propagate with a first diffraction angle, the second holographic grating being configured to diffract light of a second wavelength to propagate with a second diffraction angle; and
a waveguide element configured to guide light propagated from one of the holographic optical elements to another of the holographic optical elements.

2. The waveguide device of claim 1, wherein the first holographic grating and the second holographic grating are superimposed together.

3. The waveguide device of claim 1, wherein each of the holographic optical elements further has a third holographic grating and a fourth holographic grating, the third holographic grating is configured to diffract the light of the first wavelength to propagate with a third diffraction angle, and the fourth holographic grating is configured to diffract the light of the second wavelength to propagate with a fourth diffraction angle.

4. The waveguide device of claim 3, wherein the third holographic grating and the fourth holographic grating are superimposed together.

5. The waveguide device of claim 1, wherein the holographic optical elements are at an identical side of the waveguide element.

6. The waveguide device of claim 1, wherein the holographic optical elements are at opposite sides of the waveguide element respectively.

7. The waveguide device of claim 1, wherein at least one of the holographic optical elements is a reflective holographic element or a transmissive holographic element.

8. The waveguide device of claim 1, wherein the waveguide element has a first surface and a second surface opposite to the first surface, the first surface has a first portion parallel to the second surface and a second portion inclined relative to the second surface.

9. An optical engine, comprising:
a projector configured to project light of a first wavelength and light of a second wavelength;
two holographic optical elements each having a first holographic grating and a second holographic grating, the first holographic grating being configured to diffract the light of the first wavelength to propagate with a first diffraction angle, the second holographic grating being configured to diffract the light of the second wavelength to propagate with a second diffraction angle; and
a waveguide element configured to guide light propagated from one of the holographic optical elements to another of the holographic optical elements.

10. The optical engine of claim 9, wherein each of the holographic optical elements further has a third holographic grating and a fourth holographic grating, the third holographic grating is configured to diffract the light of the first wavelength to propagate with a third diffraction angle, and the fourth holographic grating is configured to diffract the light of the second wavelength to propagate with a fourth diffraction angle.

11. The optical engine of claim 9, wherein the waveguide element has a first surface and a second surface opposite to the first surface, the first surface has a first portion parallel to the second surface and a second portion inclined relative to the second surface.

12. The optical engine of claim 11, wherein the light of the first wavelength and the light of the second wavelength projected by the projector enter the waveguide element from the second portion of the first surface.

13. The optical engine of claim 9, further comprising a beam splitting module optically coupled between the projector and said one of the holographic optical elements.

14. The optical engine of claim 13, wherein said one of the holographic optical elements is a reflective holographic optical element, and the beam splitting module is optically coupled to said one of the holographic optical elements via the waveguide element.

15. The optical engine of claim 13, wherein the beam splitting module comprises a plurality of splitters arranged away from the projector along one dimension.
